# EUROPEAN PATENT APPLICATION

(11) **EP 1 176 174 A1**
(43) Date of publication of application: **30.01.2002**
(21) Application number: 00306315.3
(22) Date of filing: 25.07.2000
(51) Int. Cl.: C08L 99/00, C08L 97/02, C08B 30/10

(54) **A degradable material, container or packaging material made of same, and method of forming same**

(71) Applicant: CS Environmental Technology Limited, Hong Kong (HK)
(72) Inventor: Tang, Kam Pui, Ping Shan, Yuen Long, N.T. Hong Kong (CN); Liu, Qiang c/o Baolida Co.Ltd., 412007 HuNan Province (CN); Wang, Jun, Zhuzhou City, Hunan Province (CN); Tang, Zhi Fan, Zhuzhou City, Hunan Province (CN)
(74) Representative: Watkin, Timothy Lawrence Harvey

(57) **Abstract**

A degradable material is disclosed as including from 30wt% to 90wt% of a plant fibre, and from 10wt% to 60wt% of an adhesive material, wherein the adhesive material includes a modified urea-formaldehyde resin and one or more macromolecular material. A method of forming a degradable material is also disclosed as including the steps of grinding a plant fibre to a size smaller than a pre-determined size; adding an adhesive material to the ground plant fibre, mixing and heating the ground plant fibre and the adhesive material, in which the adhesive material is formed with a modified urea-formaldehyde resin and one or more water soluble macromolecular material.

## Description

This invention relates to a degradable material, and the use thereof for the making of degradable containers or packaging materials. This invention also relates to a method of forming such a material, and a container or packaging material made thereof.

### Background of the Invention

Disposable food and/or beverage containers and packaging material made of non-degradable materials have been available for a long time, and the various adverse effects of disposal of such containers and packaging materials have on the environment have been widely recognized. Some countries have been actively encouraging the research and development of degradable substitutes, and various alternative materials have been proposed for the production of degradable disposable containers and packaging materials. It is an object of the present invention to provide a new degradable material, which may be used for the production of containers or packaging materials which are environmentally friendly, and also to provide a new method for forming such a material, container and packaging material.

### Summary of the Invention

According to a first aspect of the present invention, there is provided a degradable material including from 30wt% to 90wt% of a plant fibre, and from 10wt% to 60wt% of an adhesive material, characterized in that said adhesive material includes a modified urea-formaldehyde resin and at least one water soluble macro-molecular material.

According to a second aspect of the present invention, there is provided a method of forming a degradable material, including the steps of (a) grinding a plant fibre to a size smaller than a pre-determined size; (b) adding an adhesive material to said ground plant fibre; (c) mixing and heating said ground plant fibre and said adhesive material; characterized in including a step (d) of forming said adhesive material with a modified urea-formaldehyde resin and at least one water soluble macro-molecular material.

### Detailed Description of the Invention

In horticultural and agricultural industries, a large amount of plant waste materials are left behind. It is a feature of the present invention to utilize such horticultural and agricultural wastes, or wastes of wild plants as the base ingredient for the production of a degradable material, which may be used in the production of degradable containers and packaging materials.

According to the present invention, plant fibres, which may be roots, stems, leaves, flowers, fruits and seeds of plants (such as shells and stalks of rice, wheat, corn, Chinese sorghum, peanut, coconut; bagasse, beet pulp, potato skin, etc.) are ground by a crushing machine, e.g. a dry turbo crushing mill traded by WDJ under model No. WDJ-350, which has a yield of roughly 500kg/hour, into the base ingredient. The size of the ground base ingredient may differ in accordance with the requirements of the ultimate products, and may be set to pass through sieves of 20 meshes, 40 meshes, 60 meshes, 80 meshes, 100 meshes, 120 meshes and even smaller. "Mesh" (which may also be called "pore") is a scale for particulate material, which represents the number of "pores" for every 25.4mm (i.e. 1 inch) of a sieve. In particular, the mesh (pore) number and the scale have the relationship as shown in Table 1 below:-

**Table 1**

| Mesh (pore) number | Scale |
|---|---|
| 40 meshes | 0.45mm |
| 60 meshes | 0.30mm |
| 80 meshes | 0.21mm |
| 100 meshes | 0.17mm |
| 120 meshes | 0.13mm |
| 180 meshes | 0.091mm |
| 200 meshes | 0.077mm |

If a particulate material can pass through the pores of a sieve of, say, 20 pores per inch, the material is said to be of 20 meshes. Generally speaking, the finer is the ground base ingredient, the brighter, smoother and finer the ultimate product will be. The ground base material ranges from 30-90wt% of the total mixed material, and is preferably of 45-80wt% of the total mixed material.

An adhesive agent is also required. The main ingredient of the adhesive agent is a modified urea-formaldehyde rein. A method of forming such a modified urea-formaldehyde resin is demonstrated by Example 1 below.

### Example 1

Table 2 below shows the ingredients used in the manufacture of the modified urea-formaldehyde resin.

**Table 2**

| Ingredient | Quantity (grams) |
|---|---|
| Formaldehyde (CH₂O) | 1,280 |
| Urea (CO(NH₂)₂) | 800 |
| AB-1 (Trade Mark) | 50 |
| Trimeric cyanamide (C₃N₆H₆) | 50 |
| Hexamethylene-tetramine (urotopine) ((CH₂)₆N₄) | 30 |
| Caustic soda (sodium hydroxide) (NaOH) | Appropriate amount |
| Aqueous ammonia (NH₄OH) | 100 |

1,280 grams of formaldehyde was mixed with 50 grams of hexamethylene-tetramine, and the solution was stirred. After 5 minutes of stirring, the pH value of the solution was determined. As the pH value was below 7.0, an appropriate amount of caustic soda was added to bring the pH value of the solution within the range of 7.0 to 7.5. 440 grams of urea was then added and the resultant solution was again stirred for 15 minutes. The temperature was subsequently raised and kept at 65°C for 15 minutes. The temperature was then raised to 90°C to 95°C, and maintained within this range until the pH value of the solution reached 4.1 to 4.4. A sample of the solution was taken and put into clean water of room temperature, whereupon a white cloud appeared. An appropriate amount of caustic soda was then immediately added to bring the pH value to about 6.0. The temperature was then promptly brought down to below 75°C, and the pH value of the solution was kept at 7.0 to 7.5 by addition of 50 grams of aqueous ammonia.

220 grams of urea was added and the solution was kept at a temperature of not less than 65°C for 20 minutes. When the temperature began to increase slowly, an additional 140 grams of urea was added and the solution was kept at a temperature of about 65°C for another 10 minutes. The remaining aqueous ammonia was added to adjust the pH value of the solution to 8.8 to 9.0 and the solution was kept for 10 minutes. When the temperature was raised to 85°C, 50 grams of trimeric cyanamide was added. The solution was allowed to react for about 10 minutes while the pH value was kept at about 9.0. Vacuum dehydration was started when the temperature was raised to 90°C. Vacuum dehydration was stopped when 400ml was removed from the solution, and the solution was then cooled down. When the temperature fell below 50°C, 50 grams of AB-1 (Trade Mark) was added. The solution was stirred for 10 minutes, whereupon the resultant modified urea-formaldehyde resin was discharged for use in the present invention. Such a modified urea-formaldehyde resin is of the following general chemical formula:- 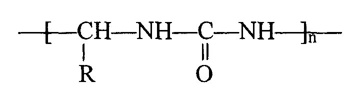 where n is a natural number, and R stands for H, a hydroxyl group or an amino group.

AB-1 (Trade Mark) is a water-base epoxy resin traded by Chang Jiang Enterprise Company, of Jiang Men City, Guangdong Province, China, and acts as a formaldehyde absorbing agent.

The molar ratio of formaldehyde and urea should be low, such as:-
formaldehyde : urea = 1.2 : 1
When the formaldehyde reacted with the urea to produce urea-formaldehyde molecules, the reaction medium was formaldehyde. In the present example, although the molar ratio of formaldehyde was not high, there was still a surplus of 0.2M, which acted as the medium for the formation of urea-formaldehyde molecules.

Urea was added in several times to ensure that such reacted sufficiently with formaldehyde to form urea-formaldehyde molecules, in order to maximize the production of the modified urea-formaldehyde resin, and minimize the amount of any remaining free formaldehyde. Hexamethylene-tetramine was formed by reacting formaldehyde with aqueous ammonia, to ensure the proper pH value necessary for the reaction, and to consume any surplus free formaldehyde. The formation of hexamethylene-tetramine also guaranteed the stability of urea-formaldehyde resin.

Vacuum dehydration was employed to facilitate the evaporation of surplus free formaldehyde after completion of the reaction. Since formaldehyde is soluble in water, when the pressure in the system decreased, the vapour pressure equilibrium in the formaldehyde solution was broken, the volatility of formaldehyde decreased, and it was easy to overflow. Any surplus free formaldehyde was also absorbed by the AB-1 (Trade Mark).

The level of free formaldehyde in the above modified urea-formaldehyde resin is below 0.2%, as compared with 3% in commonly available urea-formaldehyde resin. This effect is achieved in part by the addition of AB-1 (Trade Mark), which acts as a formaldehyde absorbing agent.

The modified urea-formaldehyde resin formed above is then mixed with one or more of the following supplementary water soluble adhesive materials to form an adhesive agent used in the present invention:-
a. natural water soluble macro-molecular materials, such as starch (wheat starch, potato starch, tapioca starch, corn starch), seaweed (algin, agar-agar), plant glue (arabic gum, soybean glue), animal glue (bone glue, gelatin, casein), and micro-organism glue (xanthan gum, guanidine glue);
b. semi-synthetic water soluble macro-molecular materials, such as modified cellulose (carboxymethyl cellulose, methyl cellulose), modified starch (carboxymethyl starch, phosphate ester starch, cationic corn starch);
c. synthetic water soluble macro-molecular materials, such as polymeric resins (polyvinyl alcohol, polyethylene glycol), and condensation resin (amino resin, polyurethane resin).

To form an adhesive agent, the modified urea-formaldehyde resin is stirred in a mixing machine. One or more of the supplementary adhesive materials is/are added slowly into the mixing machine. An appropriate adhesive agent will form upon thorough mixing of the modified urea-formaldehyde resin and the supplementary adhesive material(s). The ratio between the weight of the modified urea-formaldehyde resin and the aggregate weight of the supplementary adhesive material(s) would is between 10:0.5 to 10:35, and is preferably 10:0.5-10:8.

The adhesive agent ranges from 10-60wt% of the total mixed material, and is preferably of 15-40wt% of the total mixed material.

Uncoloured products will show the original colour of the plant fibre. The colour of the product may be changed by one or more colouring agent. A large variety of colouring agents may be used in the present invention, so long as such comply with the relevant standards of safety and hygiene requirements, and are heat-stable. Such may be inorganic colouring agents (e.g. titanium dioxide, carbon black, iron oxide red, ultramarine, cobalt blue, chrome green, nickel titanate yellow) or organic colouring agents (e.g. phthalocyanine green, phthalocyanine blue, fast yellow, amaranth). Such a colouring agent ranges from 0.1-20wt% of the product, and is preferably of 0.5-5wt% of the product.

In order to enhance the removal of the product from the moulds, an inner demoulding agent (which may be stearic acid, calcium stearate, magnesium stearate, zinc stearate, or a combination thereof) of a range of 0.1-5wt% of the product may be used. An outer demoulding agent (e.g. polyvinyl alcohol, a low-molecular polyethylene, and silicone oil) may also be used. Removal of the product from the moulds will also be enhanced if a layer of chromium or polytetrafluoro-ethylene is coated on the moulds.

Plant waste materials, after cleaning, are heated in an oven to reduce the water content to less than 5wt%. Such dried plant waste materials are then ground by a crushing machine. The machine is adjusted so that the base ingredient so produced, in addition to satisfying the mesh requirements, are also of a length-diameter ratio between 5:1 to 10:1, and preferably up to 20:1 to 100:1. It is found in practice that the larger is the length-diameter ratio, the more elastic is the product.

The solid ingredients (including the base ingredient, the colouring agent, and the demoulding agent) are put into a mixing machine for thorough mixing. The adhesive agent is then added at a temperature of 20°C to 60°C, and mixed with the solid ingredients at a speed of 200-600 revolutions per minute for 20 to 40 minutes. The temperature is then raised to 80°C to 100°C for further mixing for 5 to 20 minutes. During this stage, the water content of the mixture is maintained at 0.3-25wt%. The resultant degradable material is formed when cooled down to room temperature, and is ready for use in producing containers and packaging materials.

In the present invention, the following ingredients may be added, if desired:-
a. 0.5-10wt% of fluid aid and lubricant, e.g. epoxidized soybean oil, glycerin, and polyvinyl butyral, to increase the fluidity and mouldability of the material, and to enhance the elasticity of the degradable material, container and packaging material;
b. 1-20wt% of inorganic filling material, e.g. talc powder, kaolin, again to increase the fluidity and mouldability; and
c. 0.5-10wt% of water.

The containers and packaging materials according to the present invention may be produced in a number of ways, and may, according to the water content, be produced using high-pressure moulding or low-pressure moulding.

In high-pressure moulding method, the water content is maintained within 0.3-15wt%, and the product may be produced by press moulding or injection moulding. As compared with common plastics material press moulding or injection moulding, the water content of the material of the present invention is significantly higher. Therefore, during the forming procedure, a vital point is to allow water to be released while not damaging the product. During press moulding, the moulds are generally maintained at a temperature of 100-200°C, at a pressure of 5-80MPa, with a time duration of pressing of around 2-60s. During the whole pressing step, the pressure is reduced and the gas allowed to be exhausted once or twice, with a gas-release duration of 5-20s.

In injection moulding method, a thermoset injection moulding press machine may be used, and the moulding parameters are as follows:-

| | |
|---|---|
| Mould temperature | 140-200°C |
| Material tube temperature | 40-100°C |
| Injection pressure | 65-150MPa |
| Worm revolution speed | 30-60 rounds per minute |
| Curing time | 5-40s |
| Back pressure | Up to 0.3MPa |
| Nozzle temperature | 70-100°C |
| Injection Time | 2-10s |
| Pressure keeping time | 2-10s |

The composition of the adhesive agent may vary in accordance with the production method. For example, in such high-pressure molding method as press molding, as the temperature is high, the pressure is high, and the water content is low, one should use starch-type natural macro-molecules or polyvinyl alcohol as the supplementary adhesive material, as shown in Examples 2 to 6 in Table 3A below.

When compared with high-pressure moulding method, the water content of the material in low-pressure moulding method is higher, at 15-25wt%, and can make use of rolling moulding method or mould pressing in the ceramics industry. In low-pressure moulding method, in order to ensure that the material is of good mouldability, the base plant material has to be of 120 meshes or more. The amount of mouldability-enhancing agent and fat clay has to be increased, and the material has to be repeatedly processed by a vacuum treatment machine in which the material is further mixed and the gas content is exhausted upon the action of a vacuum pump. The material is then further mixed and extruded from a nozzle under pressure.

Because of the high water content of products made by low-pressure moulding method, it is necessary to put the product into a drying machine (e.g. a microwave drying apparatus) in which the temperature is kept at 60-140°C. The drying process will stop when the water content of the product is reduced to below 5wt%.

The choice of the supplementary adhesive material(s) also depends on the shape and function of the product. Comparatively speaking, round and relatively short products are more easily formed than rectangular and relatively tall products. Thus, in forming round and relatively short products, emphasis should be placed on the cost of the adhesive agent, whereas in forming rectangular and relatively tall products, the primary consideration should be the fluidity of the adhesive agent, see e.g. Examples 7 to 10 in Table 3B below.

In addition, if the product is required to be degradable quickly, the adhesive agent should include one or more natural macro-molecules or semi-synthetic macro-molecules. If, on the other hand, the product is required to be water-resistant, the adhesive agent should include one or more polymeric resins, such as melamine-formaldehyde resin, which may be used for producing such containers as pots for plants. It should be noted that water-resistant adhesive agents are less readily degradable, and should thus only be used in specific situations, e.g. when such is exposed to prolonged humid environment.

For containers for food and/or beverages, its inner surfaces have to be coated, which, in the case of the present invention, is styrene-acrylate copolymer. After coating, the product is heated for 2-6 minutes at 100-180°C.

Tables 3A to 3C below collectively show eighteen examples of containers and packaging materials produced in accordance with the present invention.

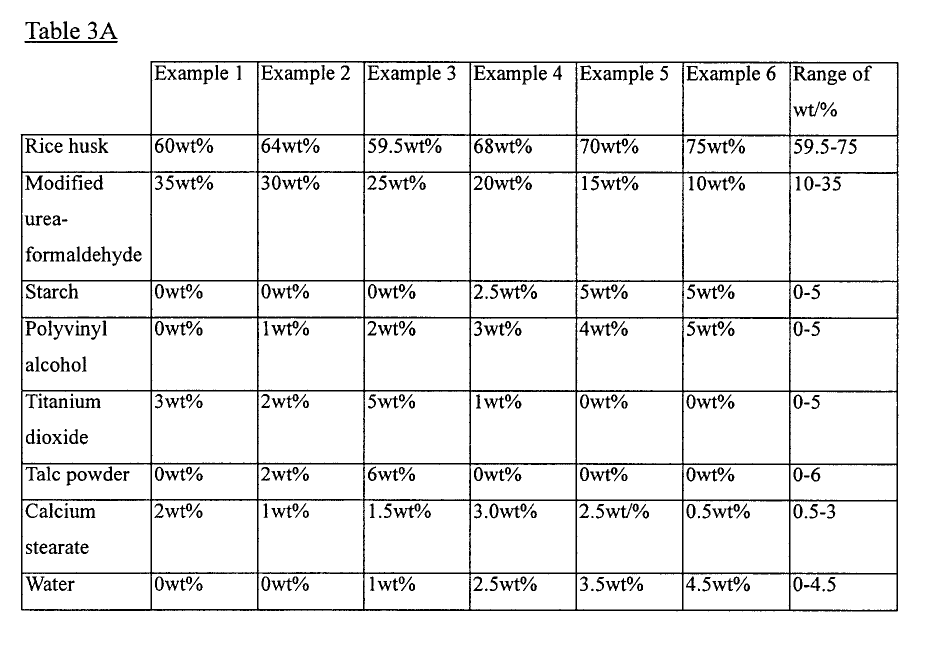

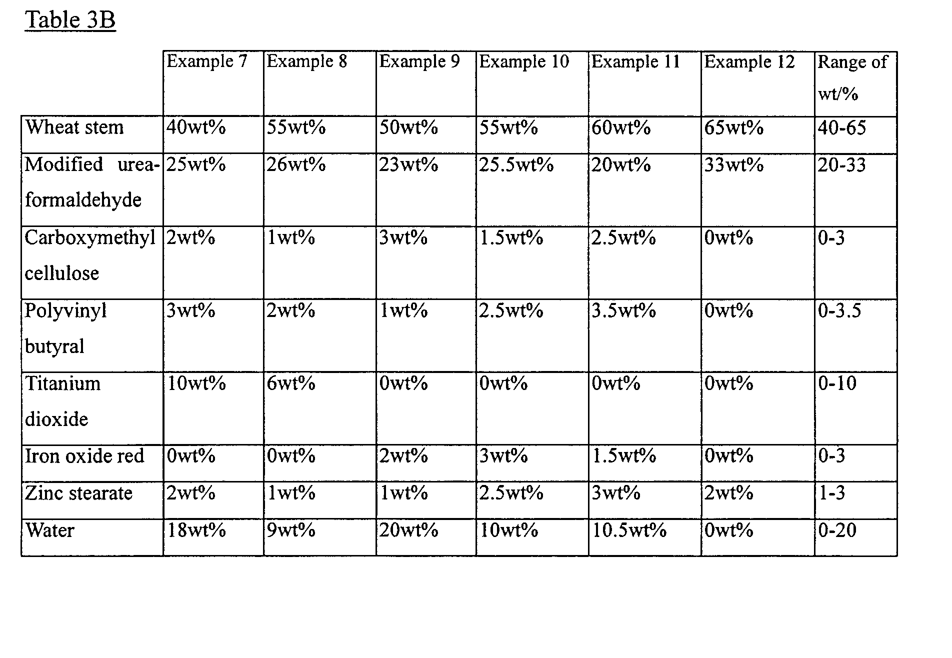

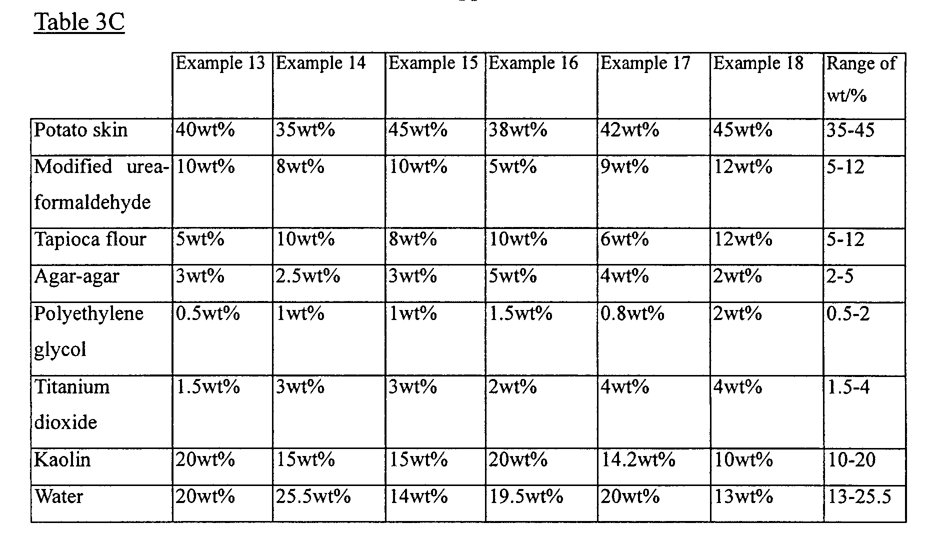

Our research indicates that there have not yet been any very accurate or quantitative definitions of "degradations". In accordance with the results of various experiments conducted by us, "degradation" for our product may be defined as that in several months or days in the natural environment, through the agency of water, sunlight, moisture, micro-organisms, a product made in accordance with the present invention will soften, crack, reduce into powder form, decompose, and finally disperse and be absorbed into the soil, and again participates in the innocuous ecological cycle of nature.

Our experience indicates that a product according to the present invention will be softened in water at normal air temperature in twenty-four hours, totally softened in forty-eight hours, and totally dissolved in about seventy-two hours. On the other hand, it will be totally dissolved in boiling water in about twelve hours. In the case of degradation in the natural environment, through the agency of water, sunlight, moisture and micro-organisms, in two to five months' time, the product according to the present invention will soften, crack, be reduced to powder form, decompose, disperse and vanish in the soil. After degradation of the product in soil, such elements as nitrogen, phosphorous and organic silicon are replenished.

Containers according to the present invention may be used as bowls, plates, trays and cups for fast food industry, or containers for horticultural industry. The materials for the production of the containers may be used as packaging materials, shock absorber for home electric appliances or domestic utensils, construction materials, decoration materials, handrails for staircases, door planks, floor boards, furniture materials, toys for children, and pet appliances.

Some of the advantages of the present invention are:-
a) the material is safe, non-toxic and environmentally friendly;
b) there are a large variety of sources of plant fibres suitable for use in the present invention, and their prices are low. Such plant fibres were previously treated as trash for disposal or burning, but can now be used for the manufacture of useful products; and
c) there is no problem of contamination or pollution associated with the degradation of the product obtained in the present invention.
   After use and disposal of the degradable material of the present invention, or container or packaging material made thereof, they may be reclaimed and refused. If some nutritive matters are added, they can also be used as fodder for livestock and domestic fowls.

## Claims

1. A degradable material including from 30wt% to 90wt% of a plant fibre, and from 10wt% to 60wt% of an adhesive material, **characterized in that** said adhesive material includes a modified urea-formaldehyde resin and at least one water soluble macro-molecular material.

2. A degradable material according to Claim 1 further **characterized in that** said adhesive material is of from 15wt% to 40wt%.

3. A degradable material according to Claim 1 or 2 further **characterized in that** the weight ratio between said modified urea-formaldehyde resin and said macro-molecular material is from 10:0.5 to 10:35.

4. A degradable material according to Claim 3 further **characterized in that** the weight ratio between said modified urea-formaldehyde resin and said macro-molecular material is from 10:0.5 to 10:8.

5. A degradable material according to any of the preceding claims further **characterized in that** said plant fibre is derived from at least one of the followings: bagasse, beet pulp, potato skin, and shells and stalks of rice, wheat, corn, Chinese sorghum, peanut, and coconut.

6. A degradable material according to any of the preceding claims further **characterized in that** said macro-molecular material(s) is/are selected from a group consisting of natural water soluble macro-molecular materials, semi-synthetic water soluble macro-molecular materials, and synthetic water soluble macro-molecular materials.

7. A degradable material according to Claim 6 further **characterized in that** said natural water soluble macro-molecular material(s) is/are selected from a group consisting of starch, seaweed, plant glue, animal glue, and microorganism glue.

8. A degradable material according to Claim 6 or 7 further **characterized in that** said semi-synthetic water soluble macro-molecular material(s) is/are selected from a group consisting of modified cellulose and modified starch.

9. A degradable material according to any one of Claims 6 to 8 further **characterized in that** said synthetic water soluble macro-molecular material(s) is/are selected from a group consisting of polymeric resins and condensation resins.

10. A degradable material according to Claim 9 further **characterized in that** said polymeric resin is selected from a group consisting of polyvinyl alcohol and polyethylene glycol.

11. A degradable material according to Claim 9 further **characterized in that** said condensation resin is selected from a group consisting of amino resin and polyurethane resin.

12. A degradable material according to any of the preceding claims further **characterized in that** said material includes a colouring agent from 0.1wt% to 20wt%.

13. A degradable material according to Claim 12 further **characterized in that** said colouring agent(s) is/are of 0.5wt% to 5wt%.

14. A degradable material according to Claim 12 or 13 further **characterized in that** colouring agent is selected from a group consisting of titanium dioxide, carbon black, iron oxide red, ultramarine, cobalt blue, chrome green, nickel titanate yellow, phthalocyanine green, phthalocyanine blue, fast yellow and amaranth.

15. A degradable material according to any of the preceding claims further **characterized in** including a fluid aid of from 0.5wt% to 10wt%.

16. A degradable material according to Claim 15 further **characterized in that** said fluid aid is selected from a group consisting of epoxidized soybean oil, glycerin, and polyvinyl butyral.

17. A degradable material according to any of the preceding claims further **characterized in that** said material includes a demoulding agent of from 0.1 wt% to 5wt%.

18. A degradable material according to Claim 17 further **characterized in that** said demoulding agent is selected from a group consisting of stearic acid, calcium stearate, magnesium stearate, zinc stearate, polyvinyl alcohol, a low-molecular polyethylene, and silicone oil.

19. A container made of a degradable material according to any of the preceding claims.

20. A packaging material made of a degradable material according to any one of Claims 1 to 18.

21. A method of forming a degradable material, including the steps of:-
(a) grinding a plant fibre to a size smaller than a pre-determined size;
(b) adding an adhesive material to said ground plant fibre;
(c) mixing and heating said ground plant fibre and said adhesive material;
**characterized in** including a step (d) of forming said adhesive material with a modified urea-formaldehyde resin and at least one water soluble macro-molecular material.

22. A method according to Claim 21 further **characterized in that** said ground plant fibre is of a length-diameter ratio from 5:1 to 100:1.

23. A method according to Claim 21 or 22 further **characterized in that** said adhesive agent is added to said ground plant fibre at a temperature of from 20°C to 60°C.

24. A method according to any one of Claims 21 to 23 further **characterized in that** said ground plant fibre and said adhesive material are mixed at a speed of from 200 to 600 revolutions per minute.

25. A method according to any one of Claims 21 to 24 further **characterized in that** said ground plant fibre and said adhesive material are mixed for 20 to 40 minutes.

26. A method according to Claim 24 further **characterized in that** said mixture is heated to from 80°C to 100°C.

27. A method according to Claim 26 further **characterized in that** said mixture is mixed for a further 5 to 20 minutes.

28. A method according to any one of Claims 21 to 27 further **characterized in** adding a fluid aid of from 0.5wt% to 10wt%.

29. A method according to Claim 28 further **characterized in that** said fluid aid is selected from a group consisting of epoxidized soybean oil, glycerin, and polyvinyl butyral.

30. A method according to any one of Claims 21 to 27 further **characterized in** adding a colouring agent of from 0.1 wt% to 20wt%.

31. A method according to Claim 30 further **characterized in that** said colouring agent(s) is/are of 0.5wt% to 5wt%.

32. A method according to Claim 30 or 31 further **characterized in that** said colouring agent is selected from a group consisting of titanium dioxide, carbon black, iron oxide red, ultramarine, cobalt blue, chrome green, nickel titanate yellow, phthalocyanine green, phthalocyanine blue, fast yellow and amaranth.

33. A method of forming a degradable container from a degradable material according to any one of Claims 1 to 18, or from a degradable material obtained according to any one of Claims 21 to 32, **characterized in** including the step of moulding said material at a temperature of 100°C to 200°C.

34. A method according to Claim 33 further **characterized in** moulding said material at a pressure of 5MPa to 80MPa.

35. A method according to Claim 33 or 34 further **characterized in** moulding said material for 2 to 60 seconds.

36. A method according to any one of Claims 33 to 35 further **characterized in** allowing gas to be exhausted at least once.

37. A method according to any one of Claims 33 to 36 further including the step of applying a layer of chromium or polytetrafluoro-ethylene onto the moulds.

38. A method according to Claim 33 further **characterized in that** said container is formed by injection moulding.

39. A method according to Claim 38 further **characterized in** including the step of drying said container.

40. A method according to any one of Claims 33 to 39 further including the step of applying a layer of styrene-acrylate copolymer on an inner surface of said container.

41. A method according to Claim 40 further including the step of heating said container at 100°C to 180°C for 2 to 6 minutes.
